(19) Europäisches Patentamt
European Patent Office
Office européen des brevets

(11) EP 3 819 022 A1

(12) EUROPEAN PATENT APPLICATION

(43) Date of publication:
**12.05.2021 Bulletin 2021/19**

(21) Application number: **19207743.6**

(22) Date of filing: **07.11.2019**

(51) Int Cl.:
***B01D 69/08*** *(2006.01)* ***C08L 69/00*** *(2006.01)*
***D01D 5/247*** *(2006.01)* ***D01F 1/08*** *(2006.01)*
***G01H 11/00*** *(2006.01)* ***C08G 64/14*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **TAYEB, Mohammed A.**
  **3955-6900 Thuwal (SA)**
- **ALAKEL, Sahel**
  **3955-6900 Thuwal (SA)**
- **KOPEC, Karina K.**
  **23955-6900 Thuwal (SA)**

(74) Representative: **Elzaburu S.L.P.**
**Miguel Angel 21, 2nd floor**
**28010 Madrid (ES)**

(54) **HOLLOW CORE FIBERS FOR LOW VIBRATION**

(57) A polymer fiber includes a hollow core having an inner surface and a porous membrane surrounding the hollow core. The porous membrane includes a cross-linkable thermoplastic polymer component and a halogenated silsesquioxane component. A method for preparing the polymer fiber is also described. A vibration sensor includes a conductor, at least one triboelectric layer including a plurality of hollow core polymer fibers, and one or more circuit elements configured to detect voltage generated by the at least one triboelectric layer and identify a vibration level applied to the vibration sensor. Each of the plurality of hollow core polymer fibers includes a hollow core having an inner surface and a porous membrane surrounding the hollow core, and the porous membrane includes a cross-linkable thermoplastic polymer component and a halogenated silsesquioxane component.

EP 3 819 022 A1

## Description

### FIELD OF THE DISCLOSURE

The present disclosure relates to polymer fibers, and more specifically to hollow core polymer fibers including a cross-linkable thermoplastic polymer component and a halogenated silsesquioxane component.

### BACKGROUND OF THE DISCLOSURE

Vibration is an issue in numerous laboratory and industrial instruments. Vibration sensors are therefore used to monitor equipment and tools, thus avoiding and minimizing unforeseen malfunctions and downtime, resulting in substantial cost savings. In addition, vibration sensors could be used to detect motion, effectively working as a motion detector.

Conventional vibration detectors include accelerometers, strain gauges, and gyroscopes. Accelerometers are popular and are available with many options, but they must be integrated for velocity and displacement, they require supporting electronics, and they generally need to be mounted directly on the vibrating test article. Several technologies exist for accelerometers, including piezoelectric, piezo-resistive, and capacitive micro-electro-mechanical systems (MEMS). Piezoelectric sensors suffer from internal resonance when excited, which makes measuring static acceleration difficult. Piezo-resistive sensors require charge amplifiers and are more expensive compared to piezoelectric sensors. Capacitive sensors are less accurate due to significant noise issues. Strain gauges and gyroscopes are difficult to install, as they require special electronics and orientation-specific tools.

These and other shortcomings are addressed by aspects of the disclosure.

### SUMMARY

Aspects of the disclosure relate to a polymer fiber, including: a hollow core having an inner surface; and a porous membrane surrounding the hollow core. The porous membrane including a cross-linkable thermoplastic polymer component and a halogenated silsesquioxane component.

Aspects of the disclosure further relate to a method for preparing a polymer fiber, including: providing a dope solution including a cross-linkable thermoplastic polymer component, a halogenated silsesquioxane component, a pore forming component and an organic solvent; providing a bore liquid; passing the dope solution and the bore liquid through a spinneret into a coagulation bath containing a non-solvent to cause formation of the polymer fiber; removing the solvent from the polymer fiber; and drying the polymer fiber.

A vibration sensor includes a conductor, at least one triboelectric layer including a plurality of hollow core polymer fibers, and one or more circuit elements configured to detect voltage generated by the at least one triboelectric layer and identify a vibration level applied to the vibration sensor. Each of the plurality of hollow core polymer fibers includes a hollow core having an inner surface and a porous membrane surrounding the hollow core, and the porous membrane includes a cross-linkable thermoplastic polymer component and a halogenated silsesquioxane component.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a polymer precipitation graph for an exemplary cross-linkable thermoplastic polymer used in an aspect of the disclosure.

FIG. 2 is a diagram of a double orifice spinneret for forming a fiber according to aspects of the disclosure.

FIG. 3 is a diagram for showing exemplary equipment for fiber according to aspects of the disclosure.

FIG. 4 is a schematic of an exemplary vibration sensor according to aspects of the disclosure.

FIGS. 5A-5D illustrate exemplary vibration sensor configurations according to aspects of the disclosure.

FIGS. 6A and 6B are SEM images showing the surface of the inner wall of a hollow core fiber formed according to aspects of the disclosure.

FIGS. 7A and 7B are SEM images showing the porous structure of the wall of the hollow core fiber formed according to aspects of the disclosure.

FIG. 8 is an image of a laboratory apparatus used for vibration testing.

FIG. 9 is a graph of output voltage versus time for several frequency levels for a vibration sensor formed according

to aspects of the disclosure and two comparative vibration sensors.

## DETAILED DESCRIPTION

The present disclosure can be understood more readily by reference to the following detailed description of the disclosure and the Examples included therein. In various aspects, the present disclosure pertains to a polymer fiber including a hollow core having an inner surface, and a porous membrane surrounding the hollow core. The porous membrane includes a cross-linkable thermoplastic polymer component and a halogenated silsesquioxane component. The present disclosure also pertains to methods for forming the polymer fibers and to vibration sensors including the polymer fibers. The vibration sensor eliminates the need for an external power source or charge amplification, and can directly correspond to vibration levels with voltage or current outputs without the need to use acceleration as a sensible measure. In addition, the vibration sensor can detect vibrations at a low range (0-50 hertz (Hz)).

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate copolymer" includes mixtures of two or more polycarbonate copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes

the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where Mi is the molecular weight of a chain and Ni is the number of chains of that molecular weight. Mn can be determined for polymers, e.g., polycarbonate polymers, by methods well known to a person having ordinary skill in the art using molecular weight standards, e.g. polycarbonate standards or polystyrene standards, preferably certified or traceable molecular weight standards.

The terms "BisA," "BPA," or "bisphenol A," which can be used interchangeably, as used herein refers to a compound having a structure represented by the formula:

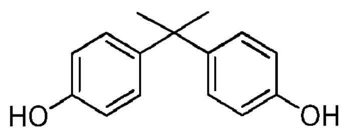

BisA can also be referred to by the name 4,4’-(propane-2,2-diyl)diphenol; p,p’-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain

structural requirements for performing the disclosed functions and it is understood that there are a variety of structures that can perform the same function that are related to the disclosed structures, and that these structures will typically achieve the same result.

## Hollow Core Polymer Fiber

Aspects of the disclosure relate to a polymer fiber, including a hollow core having an inner surface, and a porous membrane surrounding the hollow core. The porous membrane includes a cross-linkable thermoplastic polymer component and a halogenated silsesquioxane component.

The cross-linkable thermoplastic polymer component includes, but is not limited to, a cross-linkable polycarbonate (XPC), a cross-linkable polyetherimide (XPEI), a polyphenylene ether (XPPE), a polyethylene (XPE), a polypropylene (XPP), copolymers thereof, or a combination thereof.

In a particular aspect the cross-linkable thermoplastic polymer component is a cross-linkable polycarbonate (XPC). XPC is a photoactive cross-linkable polycarbonate resin that includes 0.5 mole % to 5.0 mole % endcap groups derived from monohydroxybenzophenone, including from 1.0 mole % to 5.0 mole, or from 1.5 mole % to 4.5 mole %, or from 2.0 mole % to 4.5 mole %, or from 2.5 mole % to 4.0 mole %, or from 3.0 mole % to 4.0 mole % endcap groups derived from the monohydroxybenzophenone. Most desirably, the monohydroxybenzophenone is 4-hydroxybenzophenone. In a particular aspect the resin includes 3.5 mole % endcap groups derived from 4-hydroxybenzophenone, as shown in formula (1) below:

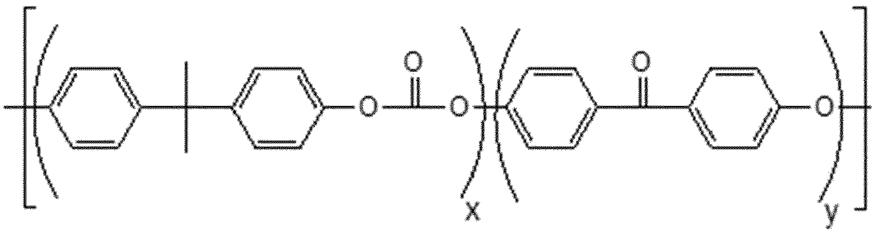

y = 3.5% (1)

XPC may be formed in accordance with the methods described in U.S. Patent Publication No. 2017/0247507, the disclosure of which is incorporated herein by this reference in its entirety. In one aspect the XPC is derived from bisphenol-A polycarbonate and includes 3.5 mole % benzophenone moieties.

In some aspects the halogenated silsesquioxane component is a perfluorinated polyhedral oligomeric silsesquioxane (F-POSS). An exemplary F-POSS is trifluoropropyl polyhedral oligomeric silsesquioxane, and has the chemical structure shown in formula (2):

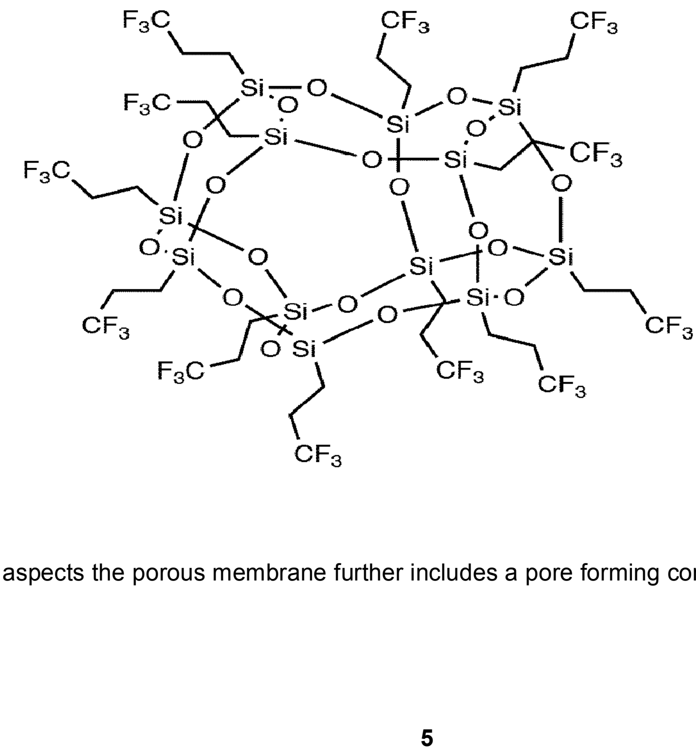

(2)

In further aspects the porous membrane further includes a pore forming component including, but not limited

to, poly(vinyl pyrrolidone) (PVP), poly(ethylene glycol), polyvinyl alcohol, polyacrylic acid, polyacrylamide, or a combination thereof. In a particular aspect the pore forming component is PVP.

In some aspects the polymer fiber includes from 65 wt% to 99.8 wt% of the cross-linkable thermoplastic polymer component; from 0.1 wt% to 10 wt% of the halogenated silsesquioxane component; and from 0.1 wt% to 25 wt% of the pore forming component.

The polymer fiber may in some aspects have an inner diameter of from 0.2 millimeter (mm) to 1.0 mm, and an outer diameter of from 0.3 mm to 2.0 mm.

**Methods of Preparing a Hollow Core Fiber**

Aspects of the disclosure further relate to method for preparing a polymer fiber, including:

a. providing a dope solution including a cross-linkable thermoplastic polymer component, a halogenated silsesquioxane component, a pore forming component and an organic solvent;
b. providing a bore liquid;
c. passing the dope solution and the bore liquid through a spinneret into a coagulation bath containing a non-solvent to cause formation of the polymer fiber;
d. removing the solvent from the polymer fiber; and
e. drying the polymer fiber.

The cross-linkable thermoplastic polymer component includes, but is not limited to, a cross-linkable polycarbonate (XPC), a cross-linkable polyetherimide (XPEI), a polyphenylene ether (XPPE), a polyethylene (XPE), a polypropylene (XPP), copolymers thereof, or a combination thereof. In a particular aspect the cross-linkable thermoplastic polymer component is a cross-linkable polycarbonate (XPC).

In some aspects the halogenated silsesquioxane component is a perfluorinated polyhedral oligomeric silsesquioxane (F-POSS).

In one aspect the dope solution includes: from 5 wt% to 40 wt% of the cross-linkable thermoplastic polymer component; from 0.01 wt% to 5 wt% of the halogenated silsesquioxane component; from 0.01 to 15 wt% of the pore forming component; and from 50 wt% to 85 wt% of the organic solvent.

Suitable organic solvents include, but are not limited to, N-methylpyrrolidone (NMP), dimethylsulfoxide (DMSO), dimethylformamide, acetonitrile (ACN), acetone, or combinations thereof. In a particular aspect the organic solvent is NMP.

The bore liquid may include a mixture of a solvent and a nonsolvent (e.g., water). In some aspects the bore liquid includes only a solvent. The bore liquid may be the same solvent that is used in the dope solution or a different solvent, as long as it is miscible with the nonsolvent included in the bore liquid. In a particular aspect the bore liquid is N-methylpyrrolidone (NMP).

Suitable pore forming components for use in the dope solution include, but are not limited to, poly(vinyl pyrrolidone) (PVP), poly(ethylene glycol), polyvinyl alcohol, polyacrylic acid, polyacrylamide, or a combination thereof. In a particular aspect the pore forming component is PVP.

The polymer fiber may be formed by a wet-dry spinning process through immersion precipitation. The fiber is precipitated from a homogenous solution through a phase inversion process, where the polymer solution enters a miscibility gap in a polymer-solvent-nonsolvent ternary system (see FIG. 1). It is known for those skilled in the art of membrane fabrication technology that a uniform structure with interconnected pores and without macrovoids may be obtained with inclusion of a pore former such as but not limited to polyvinylpyrrolidone (PVP) into the dope formulation.

The dope solution and a bore liquid are passed through a spinneret such as that shown in FIG. 2. Spinning may be performed without fiber pulling (free fall) into a container of tap water. FIG. 3 illustrates schematics exemplary spinning equipment. The dope solution and bore liquid are pumped simultaneously by means of a gear pump and an HPLC pump, respectively, through a spinneret. The spinneret shapes the fiber, determining its inner and outer diameter and wall thickness. After a short residence time in the air (referred to as an air gap) the still fluid-like fiber is immersed in the coagulation bath containing a nonsolvent (e.g., water), where the solvent/nonsolvent exchange takes place and polymer precipitation occurs. In some aspects a solvent may also be added to the coagulation bath. The solvent, if added, to the coagulation bath, may be the same solvent used for the dope solution or may be a different solvent as long as it is miscible with the nonsolvent used in the coagulation bath.

The as-formed fibers are removed from the coagulation bath and washed and dried, resulting in the dried hollow core polymer fiber. Before drying the wet fibers may be placed in a liquid solution having a lower surface tension than water (e.g., diluted ethyl alcohol) to replace the water in the membrane pores, which could help prevent pore collapse during membrane drying. Morphology of the fiber (including but not limited to average pore size, pore size distribution, porosity, pore tortuosity, wall thickness, and inner and outer diameter) may be modified by varying one or more fiber

spinning factors, including but not limited to, polymer extrusion rate, bore liquid flow rate, residence time in the air, temperature of the polymer solution, temperature of the coagulation bath, and dimensions of the spinneret. Spinning parameters that may prevent formation of the fiber membrane include the composition of the polymer solution, the composition of the bore liquid, and the composition of the coagulation bath.

In some aspects the dried polymer fiber includes from 65 wt% to 99.8 wt% of the cross-linkable thermoplastic polymer component, from 0.1 wt% to 10 wt% of the halogenated silsesquioxane component, and from 0.1 wt% to 25 wt% of the pore forming component.

**Vibration Sensor Including the Hollow Core Fibers**

Further aspects of the disclosure relate to a vibration sensor including: a conductor; at least one triboelectric layer including a plurality of hollow core polymer fibers; and one or more circuit elements configured to detect voltage generated by the at least one triboelectric layer and identify a vibration level applied to the vibration sensor. Each of the plurality of hollow core polymer fibers include a hollow core having an inner surface and a porous membrane surrounding the hollow core, and the porous membrane includes a cross-linkable thermoplastic polymer component and a halogenated silsesquioxane component.

The vibration sensor operates on the basis of the triboelectric effect generated by the polymer fibers. A current or voltage response is a result of the number of charges generated by the sensor due to the principle of tribo-electrification and electrostatic induction effects. Vibration is detected by measuring the voltage drop across the electrical load (resistor) connected to the conductor.

An exemplary vibration sensor according to aspects of the disclosure is illustrated in FIG. 4, and includes a triboelectric layer including the hollow core fibers and a conductive layer proximate the vibrating surface. The conductive layer is connected to circuit elements including a resistor and a diode. Thus in some aspects the conductor includes at least one conductive layer adjacent the at least one triboelectric layer. The conductor need not be a separate layer, however; in certain aspect the conductor may be a conductive wire embedded within the at least one triboelectric layer.

Other exemplary configurations for the vibration sensor are illustrated in FIGS. 5A-5D. In some aspects the vibration sensor includes a plurality of conductive layers or a plurality of triboelectric layers. As shown in FIG. 5A, triboelectric layer including the hollow core fibers is between the conductive layer and the vibrating surface. The configuration of FIG. 5B includes two triboelectric layers and two conductive layers, with the vibrating surface proximate the two triboelectric layers. The configuration of FIG. 5C includes two triboelectric layers and two conductive layers, with the vibrating surface proximate the two conductive layers. The configuration of FIG. 5D includes two triboelectric layers and one conductive layer, and is an example configuration that could be incorporated into a fabric to collect charges in clothing applications.

In some aspects the vibration sensor further includes a protective layer or an insulating layer covering the conductor or the at least one triboelectric layer. Exemplary materials for use in the protective layer or encapsulation include, but are not limited to, polyethylene terephthalate (PET), polypropylene (PP), polyethylene naphthalate (PEN), nylon, parylene (e.g., poly(p-xylylene) polymer), glass, polyimide (e.g., DuPont™ Kapton®), and combinations thereof.

The cross-linkable thermoplastic polymer component may include, but is not limited to, cross-linkable polycarbonate (XPC), a cross-linkable polyetherimide (XPEI), a polyphenylene ether (XPPE), a polyethylene (XPE), a polypropylene (XPP), copolymers thereof, or a combination thereof. In a particular aspect the cross-linkable thermoplastic polymer component is a cross-linkable polycarbonate (XPC).

The halogenated silsesquioxane component may include, but is not limited to, a perfluorinated polyhedral oligomeric silsesquioxane (F-POSS).

In further aspects the porous membrane further includes a pore forming component. The porous membrane may include, but is not limited to, poly(vinyl pyrrolidone) (PVP), poly(ethylene glycol), polyvinyl alcohol, polyacrylic acid, polyacrylamide, or a combination thereof. In a specific aspect the pore forming component includes PVP.

In certain aspects the plurality of hollow core polymer fibers include: from 65 wt% to 99.8 wt% of the cross-linkable thermoplastic polymer component; from 0.1 wt% to 10 wt% of the halogenated silsesquioxane component; and from 0.1 wt% to 25 wt% of the pore forming component.

Features of the polymer fibers and vibration sensor including them include, but are not limited to:

- Large-scale, cost-effective and time-saving production of hollow core fiber materials for use in a vibration detector
- Potentially higher vibration sensitivity compared with other technologies and materials
- Self-generating vibration detection materials
- Vibration detection via electronic signal measurements
- Mechanical flexibility and bendability that allows integration into three-dimensional structures and surfaces, offering shape and design freedom
- The use of lightweight materials

The hollow core polymer fibers described in the disclosure may be useful in numerous applications, including but not limited to: industrial equipment vibration sensors; home vibration detecting security systems; detecting attacks on ATMs, vending machines, etc.; washing machine load imbalance sensor; anti-theft devices; tamper detection; energy harvesting for textile and fabric materials and applications; and heart rate and blood pressure detection.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A polymer fiber, comprising:

a hollow core having an inner surface; and
a porous membrane surrounding the hollow core, wherein the porous membrane comprises a cross-linkable thermoplastic polymer component and a halogenated silsesquioxane component.

Aspect 2. The polymer fiber according to Aspect 1, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.
Aspect 3. The polymer fiber according to Aspect 1, wherein the cross-linkable thermoplastic polymer component is a cross-linkable polycarbonate (XPC).
Aspect 4. The polymer fiber according to any of Aspects 1 to 3, wherein the halogenated silsesquioxane component is a perfluorinated polyhedral oligomeric silsesquioxane (F-POSS).
Aspect 5. The polymer fiber according to any of Aspects 1 to 4, wherein the porous membrane further comprises a pore forming component selected from the group consisting of poly(vinyl pyrrolidone) (PVP), poly(ethylene glycol), polyvinyl alcohol, polyacrylic acid, polyacrylamide, and combinations thereof.
Aspect 6. The polymer fiber according to Aspect 5, wherein the pore forming component comprises PVP.
Aspect 7. The polymer fiber according to Aspects 5 or 6, wherein the polymer fiber comprises:

from 65 wt% to 99.8 wt% of the cross-linkable thermoplastic polymer component;
from 0.1 wt% to 10 wt% of the halogenated silsesquioxane component; and
from 0.1 wt% to 25 wt% of the pore forming component.

Aspect 8. A method for preparing a polymer fiber, comprising:

a. providing a dope solution comprising a cross-linkable thermoplastic polymer component, a halogenated silsesquioxane component, a pore forming component and an organic solvent;
b. providing a bore liquid;
c. passing the dope solution and the bore liquid through a spinneret into a coagulation bath containing a non-solvent to cause formation of the polymer fiber;
d. removing the solvent from the polymer fiber; and
e. drying the polymer fiber.

Aspect 9. The method according to Aspect 8, wherein the dope solution comprises:

from 5 wt% to 40 wt% of the cross-linkable thermoplastic polymer component;
from 0.01 wt% to 5 wt% of the halogenated silsesquioxane component;
from 0.01 to 15 wt% of the pore forming component; and
from 50 wt% to 85 wt% of the organic solvent.

Aspect 10. The method according to Aspect 9, wherein the organic solvent comprises N-methylpyrrolidone (NMP), dimethylsulfoxide (DMSO), dimethylformamide, acetonitrile (ACN), acetone, or a combination thereof.
Aspect 11. The method according to any of Aspects 8 to 10, wherein the bore liquid comprises N-methylpyrrolidone (NMP).
Aspect 12. The method according to any of Aspects 8 to 11, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

Aspect 13. The method according to any of Aspects 8 to 11, wherein the cross-linkable thermoplastic polymer component is a cross-linkable polycarbonate (XPC).

Aspect 14. The method according to any of Aspects 8 to 13, wherein the halogenated silsesquioxane component is a perfluorinated polyhedral oligomeric silsesquioxane (F-POSS).

Aspect 15. The method according to any of Aspects 8 to 14, wherein the pore forming component is selected from the group consisting of poly(vinyl pyrrolidone) (PVP), poly(ethylene glycol), polyvinyl alcohol, polyacrylic acid, polyacrylamide, and combinations thereof.

Aspect 16. The method according to any of Aspects 8 to 14, wherein the pore forming component comprises poly(vinyl pyrrolidone) PVP.

Aspect 17. The method according to any of Aspects 8 to 16, wherein the dried polymer fiber comprises:

from 65 wt% to 99.8 wt% of the cross-linkable thermoplastic polymer component;
from 0.1 wt% to 10 wt% of the halogenated silsesquioxane component; and
from 0.1 wt% to 25 wt% of the pore forming component.

Aspect 18. A vibration sensor comprising:

a conductor;
at least one triboelectric layer comprising a plurality of hollow core polymer fibers; and
one or more circuit elements configured to detect voltage generated by the at least one triboelectric layer and identify a vibration level applied to the vibration sensor,
wherein each of the plurality of hollow core polymer fibers comprise a hollow core having an inner surface and a porous membrane surrounding the hollow core, and
wherein the porous membrane comprises a cross-linkable thermoplastic polymer component and a halogenated silsesquioxane component.

Aspect 19. The vibration sensor according to Aspect 18, wherein the one or more circuit elements comprise a resistor and a diode.

Aspect 20. The vibration sensor according to Aspect 18 or 19, wherein the conductor comprises at least one conductive layer adjacent the at least one triboelectric layer.

Aspect 21. The vibration sensor according to Aspect 18 or 19, wherein the conductor comprises a conductive wire embedded within the at least one triboelectric layer.

Aspect 22. The vibration sensor according to any of Aspects 18 to 21, wherein the vibration sensor comprises a plurality of conductive layers or a plurality of triboelectric layers.

Aspect 23. The vibration sensor according to any of Aspects 18 to 22, wherein the vibration sensor further comprises a protective layer or an insulating layer covering the conductor or the at least one triboelectric layer.

Aspect 24. The vibration sensor according to any of Aspects 18 to 23, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

Aspect 25. The vibration sensor according to any of Aspects 18 to 23, wherein the cross-linkable thermoplastic polymer component is a cross-linkable polycarbonate (XPC).

Aspect 26. The vibration sensor according to any of Aspects 18 to 25, wherein the halogenated silsesquioxane component is a perfluorinated polyhedral oligomeric silsesquioxane (F-POSS).

Aspect 27. The vibration sensor according to any of Aspects 18 to 26, wherein the porous membrane further comprises a pore forming component selected from the group consisting of poly(vinyl pyrrolidone) (PVP), poly(ethylene glycol), polyvinyl alcohol, polyacrylic acid, polyacrylamide, and combinations thereof.

Aspect 28. The vibration sensor according to Aspect 27, wherein the pore forming component comprises PVP.

Aspect 29. The vibration sensor according to any of Aspects 18 to 28, wherein the plurality of hollow core polymer fibers comprise:

from 65 wt% to 99.8 wt% of the cross-linkable thermoplastic polymer component;
from 0.1 wt% to 10 wt% of the halogenated silsesquioxane component; and
from 0.1 wt% to 25 wt% of the pore forming component.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Formation of Hollow Core Fiber Materials

#### Composition of the dope solution

A hollow core porous polymeric fiber was fabricated by means of dry-wet spinning through immersion precipitation. The fiber was produced out of a homogenous dope solution through a phase inversion process, where the polymer, here photoactive polycarbonate XPC 2246, available from SABIC, precipitates as a result of entering a miscibility gap in a ternary system polymer-solvent-nonsolvent (see FIG. 1). N-methylpyrrolidone (NMP) was used as the solvent. NMP is a commonly utilized solvent for hollow fiber membrane spinning due to its miscibility with water (the nonsolvent), its high boiling point of 202 °C and low environmental and health risks (in comparison to other solvents with similar chemical and physical properties).

Fluorinated Polyhedral Oligomeric Silsesquioxane (F-POSS) was used as an additive to the dope solution. A pore forming component, polyvinylpyrrolidone (PVP) K30, having a molecular weight of 40,000, available from Ashland Specialty Chemicals, was further included to facilitate pore formation in the porous membrane.

#### Fabrication of the Hollow Core Fiber

Prior to membrane fabrication, the photoactive polycarbonate XPC 2246 and polyvinylpyrrolidone PVP K30 were dried in a vacuum oven at 80 °C for 24 hours (h). Polymer solution was prepared directly in the polymer dope tank of the spinning machine. The components were added at once and stirred at 50°C overnight to form the dope solution, and subsequently left for degassing for 24 h. The dope solution had the following composition: 24 wt% XPC 2246; 8 wt% PVP K30; 0.24 wt% F-POSS; and 67.76 wt% NMP.

Hollow fiber was extruded through a double orifice spinneret with an inner diameter of 0.4 millimeter (mm) and outer diameter 0.8 mm. See FIG. 2. NMP was used as the bore liquid.

Spinning was performed at room temperature without fiber pulling (free fall) into a coagulation bath (tap water). FIG. 3 illustrates the spinning equipment. The dope solution and bore liquid were pumped simultaneously by means of a gear pump and an HPLC pump, respectively, through a spinneret. The spinneret shaped the fiber, determining its inner and outer diameter and wall thickness. After a short residence time in the air (referred to as an "air gap") the still fluid-like fiber was immersed in the coagulation bath containing water (nonsolvent), where the solvent/nonsolvent exchange took place and the polymer precipitation occurred. The fibers were washed with tap water for 24 h (multiple water refreshing). Before drying in air, the fibers were placed in a 50% v/v solution of ethyl alcohol in tap water for 2 hours. This allowed water in the membrane pores to be replaced with a lower surface tension solution (ethyl alcohol) than water, avoiding pore collapse during membrane drying.

### Hollow Fiber Characterization

The fibers were sputter-coated with 5 nm of iridium and imaged using a Quanta 600 scanning electron microscope (SEM). FIGS. 6A-B and 7A-B show images of the hollow fiber cross-section, the surface of the inner wall, and the porous structure of the fiber wall, respectively.

The surface of the inner wall is characterized by a uniform distribution of pores, with the pore size in the range of 20-50 nanometers (nm) (see FIGS. 6A, 6B). With reference to FIGS. 7A and 7B, the cross-section through the fiber wall presents two particular features: (i) large voids traversing through the fiber wall but that do not perforate the inner or outer surface (and that therefore do not diminish the fiber mechanical integrity); and (ii) a uniform, sponge-like, well interconnected porous structure with a pore size in the range of 0.4 to 0.7 micron ($\mu$m).

## Vibration Testing

The hollow core fibers were incorporated into a vibration detection sensor. The hollow core fibers were applied to aluminum foil to act as charge collector and placed onto a vibrator which had the capacity to vibrate at frequencies up to 50 Hertz (Hz). This configuration was connected to a circuit consisting of a 500 megaohm (MΩ) resistor and a diode for voltage regulation purposes. The entire apparatus was then connected to a computer to monitor and log the electrical response. FIG. 8 shows the apparatus as used in the lab.

The electronic signal (i.e. voltage output) resulting from the vibration test was observed and recorded. The vibration sensor was compared to a comparable triboelectric sensor including an XPC-F-POSS polymer thin film applied to aluminum foil. The purpose of using the thin film is to compare the hollow core fibers against a conventional material form that had previously been observed to generate excellent voltage outputs. To perform this test, the hollow fibers were attached to an aluminum sheet using clear tape and covering a 1 $inch^2$ ($in^2$) area. Similarly, XPC-F-POSS polymer was dissolved in DMF, spin-coated onto a 1 $in^2$ sheet of aluminum foil, and finally cured. For comparison, another sample composed of a sheet of 1 $in^2$ of aluminum (Al) foil was selected as a third sample. This ensured consistency in the area of testing and the substrate material, thus only altering the active materials (hollow fibers vs. thin film vs. conductive layer).

Each of these test materials were vibrated at five different frequency levels ranging from 0 to 53 Hz using a Thermo Scientific LP Vortex Mixer. Each vibrational frequency was held for around 80 seconds to allow the output voltage to stabilize. FIG. 9 illustrates the output voltages resulting from the three samples at the various vibration frequencies.

Aluminum foil shows the lowest output voltage values of the three samples. For the first two intervals (53 Hz and 42 Hz, 0 - 160 seconds), there is no clear distinction in terms of output voltages after lowering the vibrational frequency from 53 Hz to 42 Hz; the voltage remains constant at 0.41 $\pm$ 0.11 V. In the next interval (160 - 240 seconds), the vibrational frequency was lowered from 42 Hz to 25 Hz; this was accompanied by a decrease of output voltage from 0.41 $\pm$ 0.11 V to 0.30 $\pm$ 0.11 V. This introduces a new level of detection. In the next interval (240 - 320 seconds), the vibrational frequency was lowered from 25 Hz to 8 Hz and there was a clear decrease of voltage output from 0.30 $\pm$ 0.11 V to 0.11 $\pm$ 0.10 V. In the final interval (320 - 400 seconds), the vibration was decreased from 8 Hz to 0 Hz. There was no apparent change in output voltage; it remained at 0.11 $\pm$ 0.10 V. This indicates that the output voltage detected when using a vibration frequency of 8 Hz was machine noise and hence, the conductive layer detects only frequencies above 8 Hz.

From the data in FIG. 9 it is apparent that the XPC-F-POSS polymer film provides a higher voltage output than aluminum foil. While vibrating at a frequency of 53 Hz, the film has a voltage output of 1.07 $\pm$ 0.13 V. At a frequency value of 42 Hz the film has an output voltage value of 1.02 $\pm$ 0.13 V. However, this change falls within the error range and cannot be considered as a different detection level. Lowering the vibrational frequency to a value of 25 Hz significantly lowered the voltage output to a value of 0.71 $\pm$ 0.14 V. This falls outside the error range and is considered a separate detection level. Similar to the aluminum foil, when the frequency is lowered below 8 Hz, the film stops detecting vibrations and the output voltage displayed is associated with machine detection error. The conclusion from this data is that XPC-F-POSS polymer film is similar to the aluminum conductive layer and thus cannot be used to detect low vibration frequency. Further, the XPC-F-POSS polymer film can only be used to discern two different vibration detection levels (between 42 Hz and 25 Hz).

The vibration sensor including the inventive hollow core fibers exhibited an even higher voltage output than the sensor including the XPC-F-POSS polymer film. When subjected to a vibrational frequency of 53 Hz, the fibers produced an average voltage output of 1.87 $\pm$ 0.31 V. When the frequency was lowered to a value of 42 Hz, the voltage output was 1.38 $\pm$ 0.18 V, demonstrating a second detection level. Lowering the frequency to 25 Hz lowered the voltage output to 1.00 $\pm$ 0.22 V, demonstrating a third detection level. Finally, lowering the frequency to 8 Hz gives provided a voltage output of 0.19 $\pm$ 0.12 V. Ceasing vibrations provided a voltage output of 0.14 $\pm$ 0.01 V. While the voltage output at 8 Hz is close to that at 0 Hz (no vibration) there is still enough of a difference to be considered a separate detection level (a fourth detection level) rather than a level associated with machine detection error.

To summarize, the aluminum foil and XPC-F-POSS polymer film sensors demonstrated only two discernable detection levels. In contrast, the vibration sensor including the inventive hollow core fibers demonstrated four vibration detection levels and also generated a higher voltage output than that of the other materials. The inventive hollow core fibers are thus suitable for use in low vibration detection sensing applications.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

**1.** A polymer fiber, comprising:

a hollow core having an inner surface; and
a porous membrane surrounding the hollow core, wherein the porous membrane comprises a cross-linkable thermoplastic polymer component and a halogenated silsesquioxane component.

**2.** The polymer fiber according to claim 1, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

**3.** The polymer fiber according claim 1 or 2, wherein the halogenated silsesquioxane component is a perfluorinated polyhedral oligomeric silsesquioxane (F-POSS).

**4.** The polymer fiber according to any of claims 1 to 3, wherein the porous membrane further comprises a pore forming component selected from the group consisting of poly(vinyl pyrrolidone) (PVP), poly(ethylene glycol), polyvinyl alcohol, polyacrylic acid, polyacrylamide, and combinations thereof.

**5.** The polymer fiber according to claim 4, wherein the polymer fiber comprises:

from 65 wt% to 99.8 wt% of the cross-linkable thermoplastic polymer component;
from 0.1 wt% to 10 wt% of the halogenated silsesquioxane component; and
from 0.1 wt% to 25 wt% of the pore forming component.

**6.** A method for preparing a polymer fiber, comprising:

a. providing a dope solution comprising a cross-linkable thermoplastic polymer component, a halogenated silsesquioxane component, a pore forming component and an organic solvent;
b. providing a bore liquid;
c. passing the dope solution and the bore liquid through a spinneret into a coagulation bath containing a non-solvent to cause formation of the polymer fiber;
d. removing the solvent from the polymer fiber; and
e. drying the polymer fiber.

**7.** The method according to claim 6, wherein the dope solution comprises:

from 5 wt% to 40 wt% of the cross-linkable thermoplastic polymer component;
from 0.01 wt% to 5 wt% of the halogenated silsesquioxane component;
from 0.01 to 15 wt% of the pore forming component; and
from 50 wt% to 85 wt% of the organic solvent.

**8.** A vibration sensor comprising:

a conductor;
at least one triboelectric layer comprising a plurality of hollow core polymer fibers; and
one or more circuit elements configured to detect voltage generated by the at least one triboelectric layer and identify a vibration level applied to the vibration sensor,
wherein each of the plurality of hollow core polymer fibers comprise a hollow core having an inner surface and a porous membrane surrounding the hollow core, and
wherein the porous membrane comprises a cross-linkable thermoplastic polymer component and a halogenated silsesquioxane component.

**9.** The vibration sensor according to claim 8, wherein the conductor comprises at least one conductive layer adjacent the at least one triboelectric layer.

**10.** The vibration sensor according to claim 8 or 9, wherein the conductor comprises a conductive wire embedded within the at least one triboelectric layer.

**11.** The vibration sensor according to any of claims 8 to 10, wherein the vibration sensor comprises a plurality of conductive layers or a plurality of triboelectric layers.

**12.** The vibration sensor according to any of claims 8 to 11, wherein the vibration sensor further comprises a protective layer or an insulating layer covering the conductor or the at least one triboelectric layer.

**13.** The vibration sensor according to any of claims 8 to 12, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

**14.** The vibration sensor according to any of claims 8 to 13, wherein the porous membrane further comprises a pore forming component selected from the group consisting of poly (vinyl pyrrolidone) (PVP), poly(ethylene glycol), polyvinyl alcohol, polyacrylic acid, polyacrylamide, and combinations thereof.

**15.** The vibration sensor according to claim 14, wherein the plurality of hollow core polymer fibers comprise:

from 65 wt% to 99.8 wt% of the cross-linkable thermoplastic polymer component;
from 0.1 wt% to 10 wt% of the halogenated silsesquioxane component; and
from 0.1 wt% to 25 wt% of the pore forming component.

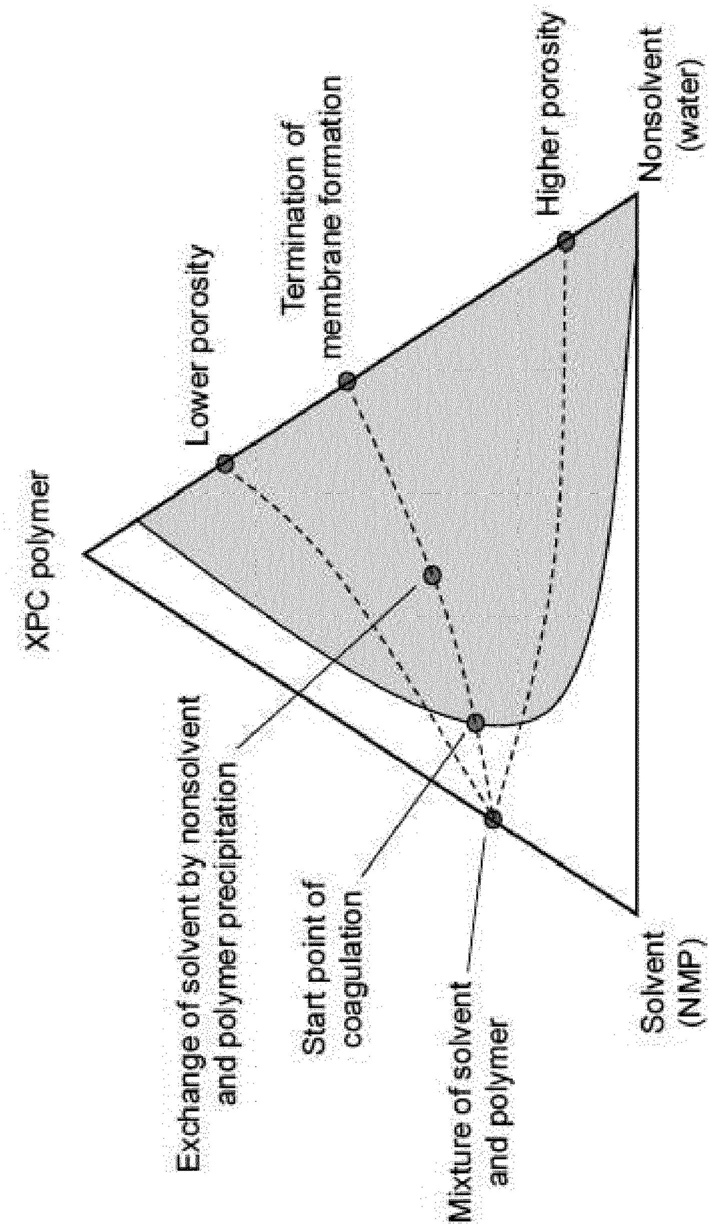
XPC polymer
Lower porosity
Termination of
membrane formation
Higher porosity
Nonsolvent
(water)
Exchange of solvent by nonsolvent
and polymer precipitation
Start point of
coagulation
Mixture of solvent
and polymer
Solvent
(NMP)

FIG. 1

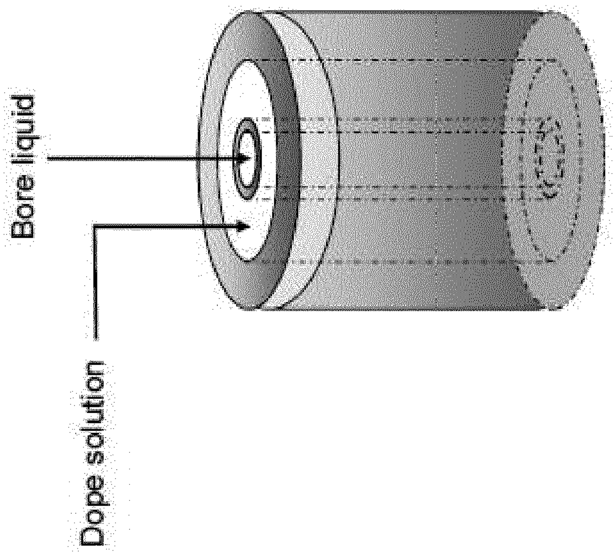
Bore liquid
Dope solution

FIG. 2

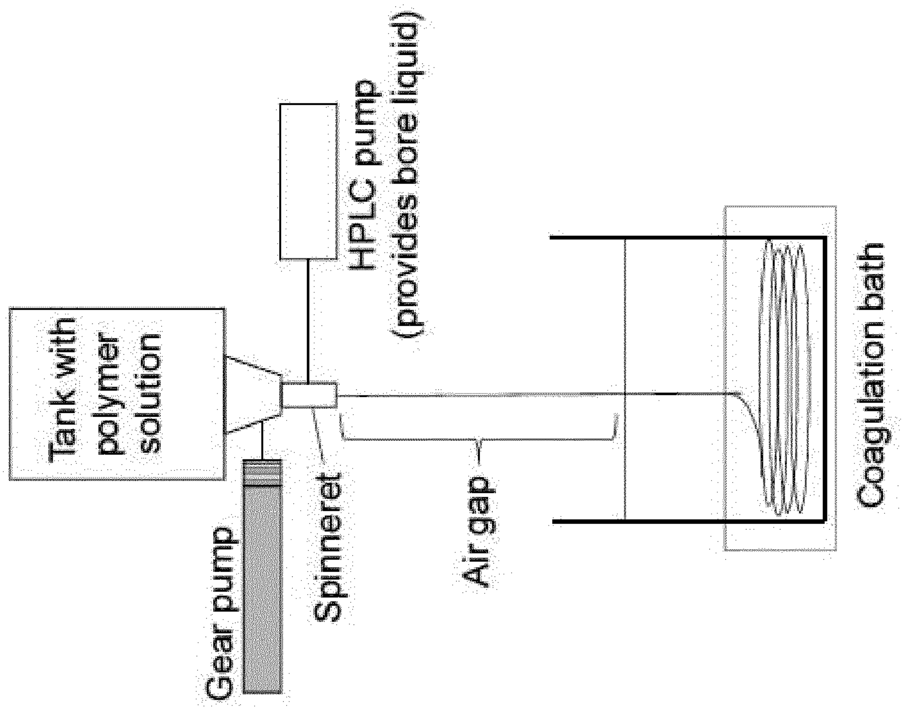
Tank with polymer solution
HPLC pump (provides bore liquid)
Gear pump
Spinneret
Air gap
Coagulation bath

FIG. 3

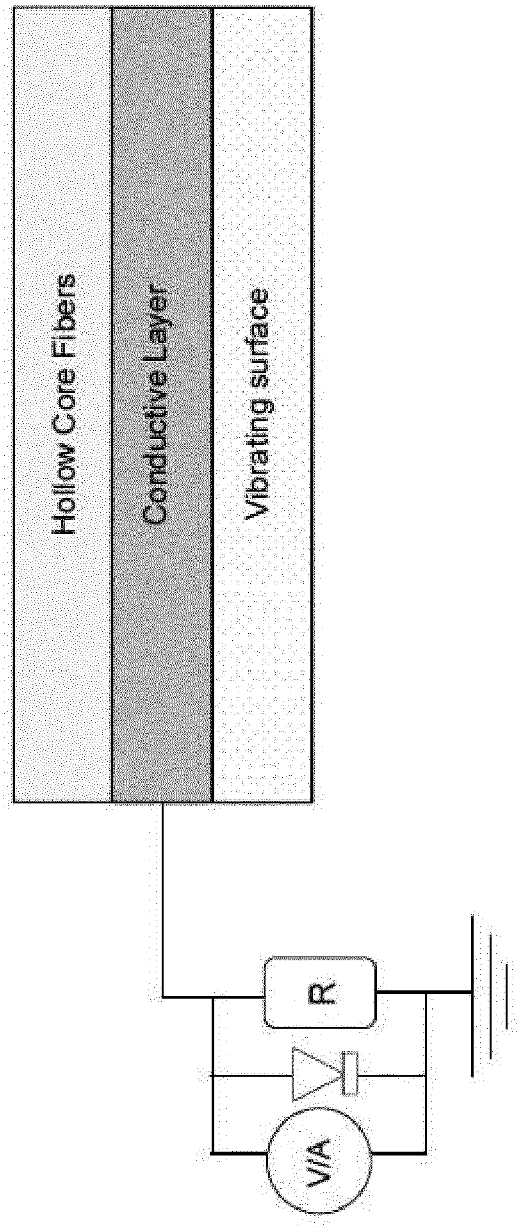
Hollow Core Fibers
Conductive Layer
Vibrating surface
R
V/A

FIG. 4

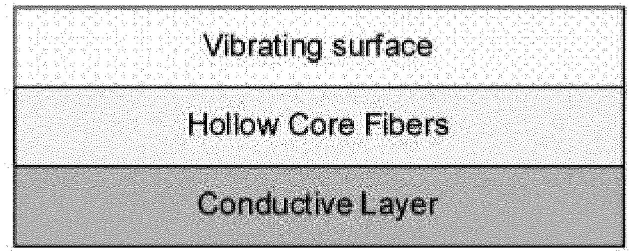


FIG. 5A

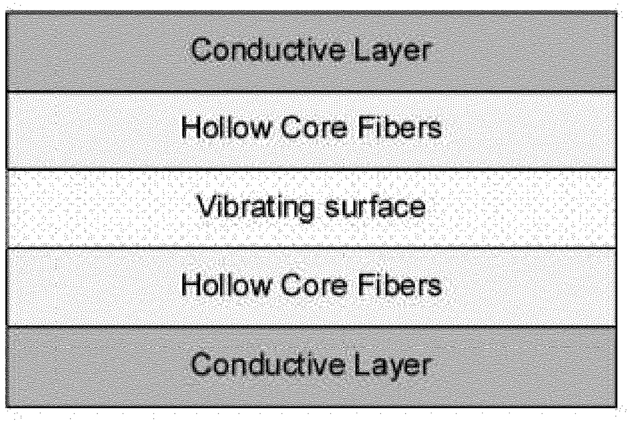


FIG. 5B

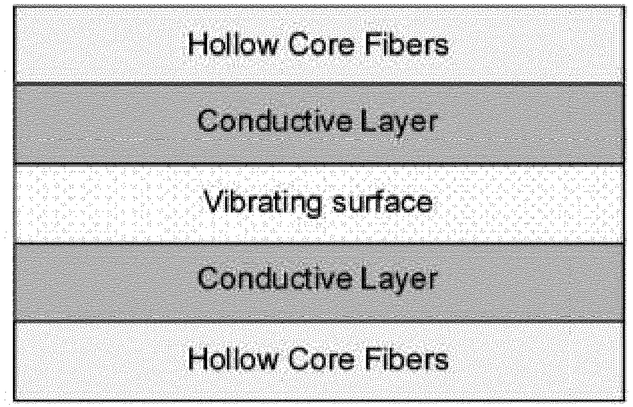


FIG. 5C

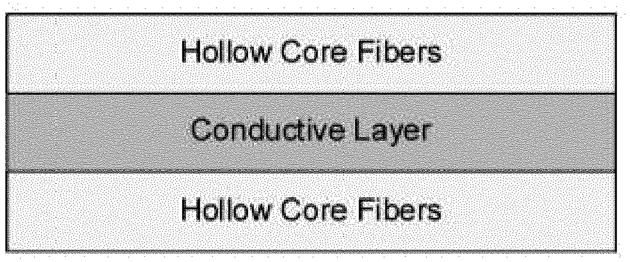


FIG. 5D

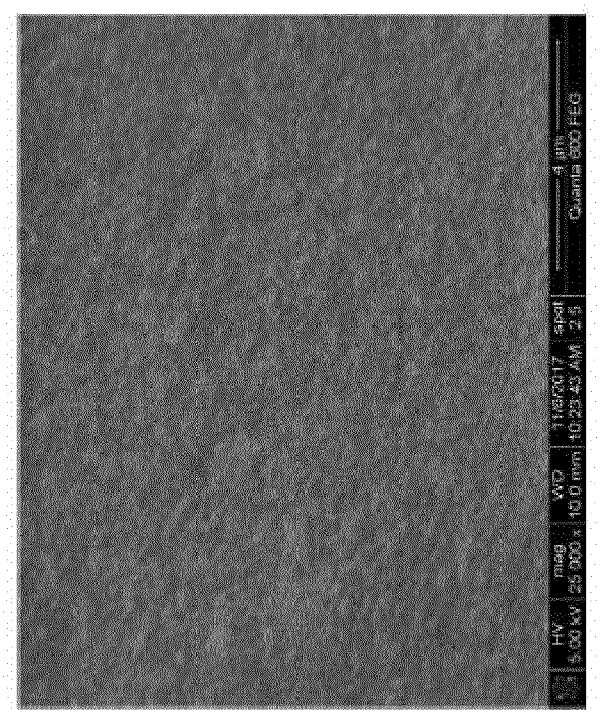
HV
5.00 kV
mag
25 000 x
WD
10.0 mm
spot
2.5
4 µm
Quanta 600 FEG

FIG. 6B

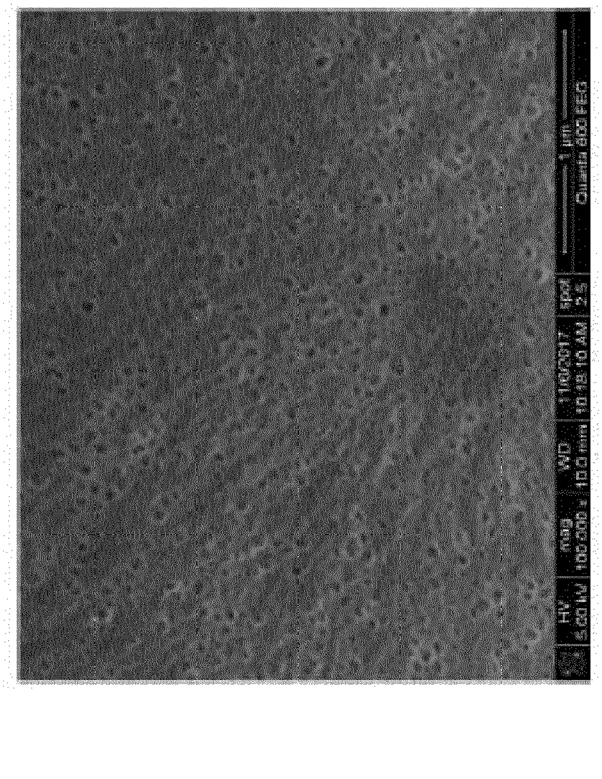
HV
5.00 kV
mag
100 000 x
WD
10.0 mm
spot
2.5
1 µm
Quanta 600 FEG

FIG. 6A

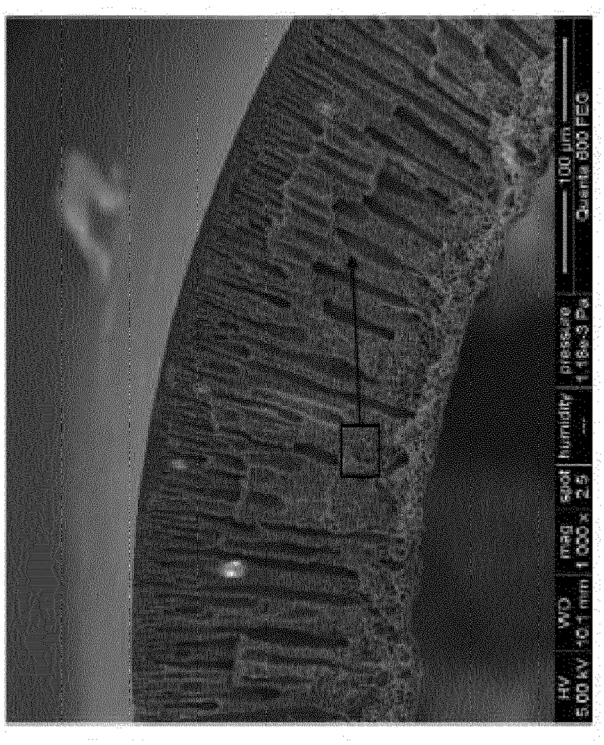
HV 5.00 kV
WD 10.1 mm
mag 1 000 x
spot 2.5
humidity ---
pressure 1.18e-3 Pa
100 µm
Quanta 600 FEG

FIG. 7A

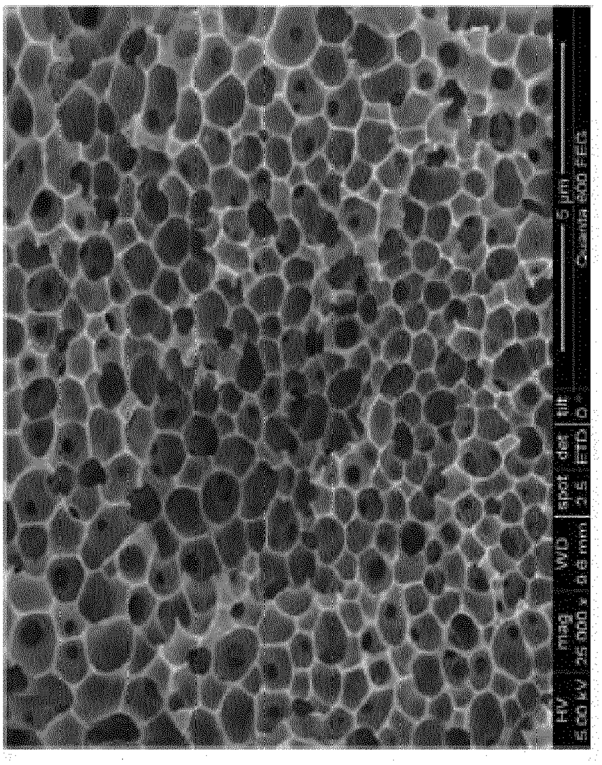
HV 5.00 kV
mag 25 000 x
WD 9.6 mm
spot 2.5
det ETD
tilt 0°
5 µm
Quanta 600 FEG

FIG. 7B

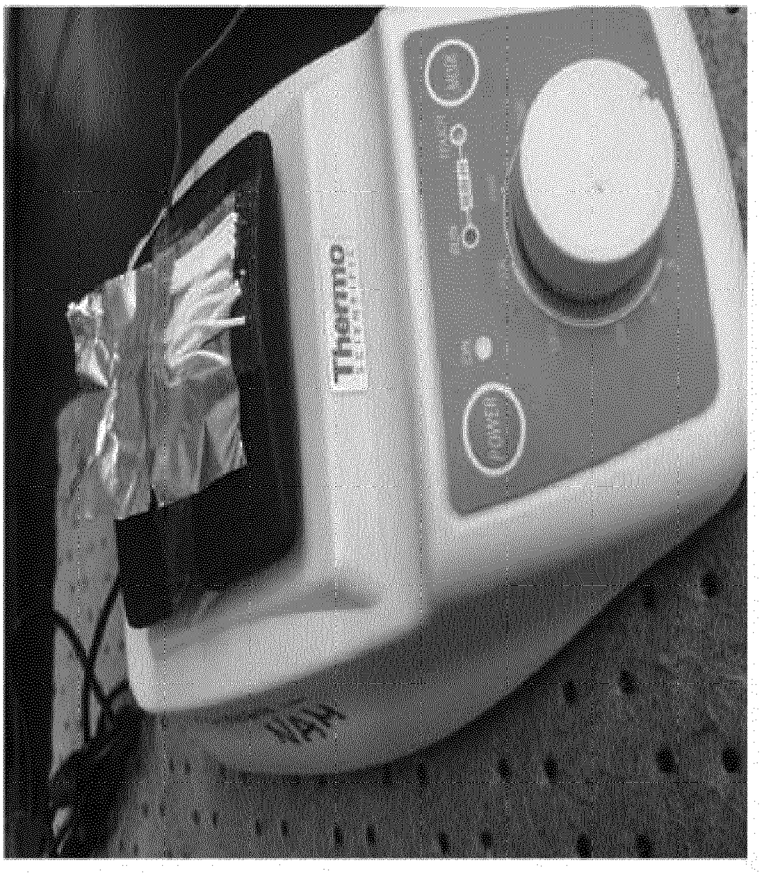


FIG. 8

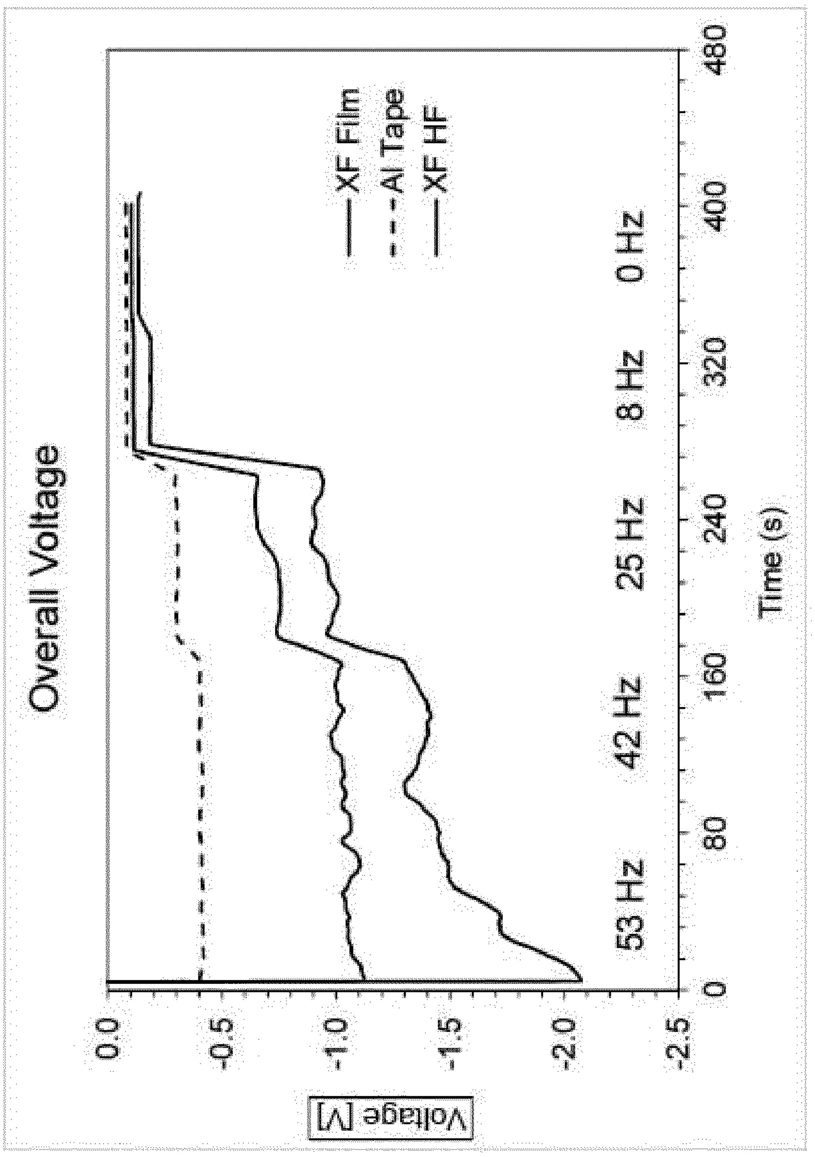
Overall Voltage
Voltage [V]
0.0
-0.5
-1.0
-1.5
-2.0
-2.5
0
80
160
240
320
400
480
Time (s)
53 Hz
42 Hz
25 Hz
8 Hz
0 Hz
XF Film
Al Tape
XF HF

FIG. 9

Europäisches Patentamt
European Patent Office
Office européen des brevets

# EUROPEAN SEARCH REPORT

Application Number
EP 19 20 7743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | WO 2015/153966 A1 (SABIC GLOBAL TECHNOLOGIES BV [NL]; FLORES AMANDA MARIE [US]) 8 October 2015 (2015-10-08)<br>* paragraph [0121]; example 5 * | 1-3<br>4-15 | INV.<br>B01D69/08<br>C08L69/00<br>D01D5/247<br>D01F1/08<br>G01H11/00<br>C08G64/14 |
| Y<br>A | US 4 955 993 A (SANDERS JR EDGAR S [US] ET AL) 11 September 1990 (1990-09-11)<br>* examples 1-14 * | 1-3<br>4-15 | |
| A | EP 3 564 296 A1 (SABIC GLOBAL TECHNOLOGIES BV [NL]) 6 November 2019 (2019-11-06)<br>* claims 2, 13, 14 * | 1-15 | |
| A | WO 2019/155376 A1 (SABIC GLOBAL TECHNOLOGIES BV [NL]) 15 August 2019 (2019-08-15)<br>* paragraph [0051] - paragraph [0097]; figures 1, 4, 10 * | 1-15 | |
| | | | TECHNICAL FIELDS SEARCHED (IPC) |
| | | | D01F<br>B01D<br>C08L<br>D01D<br>C08G<br>G01H |

The present search report has been drawn up for all claims

1

| Place of search | Date of completion of the search | Examiner |
|---|---|---|
| The Hague | 26 May 2020 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 20 7743

This annex lists the patent family members relating to the patent documents cited in the above-mentioned European search report. The members are as contained in the European Patent Office EDP file on
The European Patent Office is in no way liable for these particulars which are merely given for the purpose of information.

26-05-2020

| Patent document cited in search report | Publication date | Patent family member(s) | Publication date |
|---|---|---|---|
| WO 2015153966 A1 | 08-10-2015 | EP 3126555 A1 | 08-02-2017 |
| | | US 2017015783 A1 | 19-01-2017 |
| | | WO 2015153966 A1 | 08-10-2015 |
| US 4955993 A | 11-09-1990 | NONE | |
| EP 3564296 A1 | 06-11-2019 | EP 3564296 A1 | 06-11-2019 |
| | | WO 2019211759 A1 | 07-11-2019 |
| WO 2019155376 A1 | 15-08-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170247507 A